# FASCICULE DE BREVET EUROPEEN

(11) **EP 3 831 674 B1**
(45) Date de publication et mention de la délivrance du brevet: **10.08.2022**
(21) Numéro de dépôt: 20207083.5
(22) Date de dépôt: 12.11.2020
(51) Int. Cl.: B60S 1/50, B60R 16/02, B60R 5/04

(54) **VEHICULE AUTOMOBILE ÉQUIPÉ D'UN RESERVOIR DE LAVE-GLACE DISPOSÉ DANS UN COMPARTIMENT ARRIÈRE**
KRAFTFAHRZEUG MIT SCHEIBENWASCHTANK, DER IN EINEM HINTEREN BEREICH ANGEORDNET IST
MOTOR VEHICLE PROVIDED WITH A WINDSCREEN WASHER TANK ARRANGED IN A REAR COMPARTMENT

(30) Priorité: 02.12.2019 FR 1913596
(43) Date de publication de la demande: 09.06.2021
(73) Titulaire: PSA Automobiles SA, 78300 Poissy (FR)
(72) Inventeur: MICHEL, THIERRY, 78110 LE VESINET (FR); LE FLOCH, BERTRAND, 91140 VILLEBON SUR YVETTE (FR); FORTUNE, LAURENT, 78300 POISSY (FR)

(56) Documents cités:
- DE-A1- 19 933 512
- FR-A1- 2 867 128
- FR-A1- 2 884 788
- US-A1- 2004 142 232

## Description

La présente invention revendique la priorité de la demande française N°1913596 déposée le 02.12.2019.

La présente invention concerne un véhicule automobile équipé d'un lave-glace de lunette arrière, ainsi qu'un procédé de remplissage du réservoir du lave-glace dans ce type de véhicule.

Certains véhicules automobiles comportent un lave-glace de pare-brise comprenant un réservoir, et une pompe alimentant un ou plusieurs gicleurs disposés à l'extérieur, rejetant un jet de liquide de lavage sur la vitre pour permettre ensuite son essuyage par un essuie-glace.

Un type de boîtier de réservoir de lave-glace connu, présenté notamment par le document FR-A1-2867128, comporte deux volumes comprenant une réserve principale et une réserve auxiliaire, disposés sur un cadre extensible permettant une compression de cette réserve auxiliaire pour mettre le liquide en pression. On peut détacher rapidement le cadre afin d'emporter le réservoir pour le remplir à l'extérieur du véhicule.

Le réservoir est installé dans un coffre formé sur un côté d'un compartiment arrière du véhicule, le bouchon du réservoir étant disposé sur la paroi du supérieur de ce coffre. L'accès au compartiment arrière se fait par un couvercle de compartiment formé sur l'extérieur de la carrosserie.

Toutefois certains véhiculent compacts et économiques, peuvent comporter un compartiment arrière ne comprenant pas d'ouverture vers l'extérieur de la carrosserie, ce qui rend difficile l'accès à un réservoir de lave-glace disposé dans ce compartiment pour effectuer périodiquement des remplissages de ce réservoir. DE-A-19933512 montre le préambule de la revendication 1.

La présente invention a notamment pour but d'éviter ces problèmes de l'art antérieur.

Elle propose à cet effet un véhicule automobile équipé d'un réservoir de lave-glace installé dans un compartiment arrière du véhicule, comportant dans l'habitacle une plage arrière disposée entre des sièges et une lunette arrière du véhicule, cette plage comprenant une trappe équipée d'un couvercle recouvrant un bouchon de remplissage du réservoir, ce couvercle permettant dans une position ouverte un accès au bouchon pour un remplissage du réservoir.

Un avantage de ce véhicule est qu'on dispose à l'intérieur du véhicule, en se tournant vers l'arrière de l'habitacle, d'un accès facile à la plage arrière permettant d'ouvrir le couvercle de la trappe pour réaliser le remplissage du réservoir par son bouchon rendu accessible. De plus en cas de débordement ou de coulures du liquide de lave-glace autour du bouchon, ce liquide s'écoule directement dans le compartiment arrière pour finir à l'extérieur, en évitant des coulées dans l'habitacle qui pourraient le souiller et entraîner des odeurs désagréables.

On réalise de manière économique un accès simple et rapide à des éléments techniques du véhicule, par la trappe de la plage arrière réalisable avec un faible coût, qui avec son couvercle fermé conserve une esthétique valorisante de l'habitacle du véhicule.

Le véhicule automobile selon l'invention peut comporter de plus une ou plusieurs des caractéristiques suivantes, qui peuvent être combinées entre elles.

Avantageusement, le véhicule automobile comporte une traverse fixée en partie supérieure du compartiment arrière, en-dessous de la plage arrière, recevant le réservoir qui est posé dessus.

En complément, le véhicule peut comporter des boîtiers de fusibles disposés sous la trappe, et accessibles quand le couvercle est ouvert. Avantageusement, le couvercle présente une forme courbée qui s'inscrit globalement dans la forme de la plage arrière quand il est fermé.

Dans ce cas, avantageusement le couvercle comporte des verrous qui sont verrouillables par une rotation suivant une fraction de tour. Avantageusement, le couvercle comporte un marquage formé par un symbole représentant un lave-glace.

Avantageusement, le compartiment arrière comporte une batterie d'alimentation d'un moteur de traction du véhicule qui est disposée en dessous du réservoir de lave-glace.

Avantageusement, le compartiment arrière ne comporte aucun ouvrant donnant vers l'extérieur, l'accès à ses équipements intérieurs se faisant par le dessous du véhicule.

L'invention a aussi pour objet un procédé de remplissage du réservoir de lave-glace sur un véhicule comprenant l'une quelconque des caractéristiques précédentes, remarquable en ce qu'un opérateur se rendant dans l'habitacle à l'arrière du véhicule, ouvre le couvercle de la plage arrière, puis ouvre le bouchon de remplissage disposé sous le couvercle pour réaliser le remplissage du réservoir.

L'invention sera mieux comprise et d'autres caractéristiques et avantages apparaîtront plus clairement à la lecture de la description ci-après donnée à titre d'exemple, en référence aux dessins annexés dans lesquels :
[Fig. 1] est une vue de côté d'un véhicule selon l'invention ;
[Fig. 2] est une vue de dessus de la plage arrière de ce véhicule avec le couvercle de trappe fermé recouvrant le réservoir et son bouchon ; et
[Fig. 3] est une vue de la plage arrière avec son couvercle ouvert donnant un accès au bouchon du réservoir.

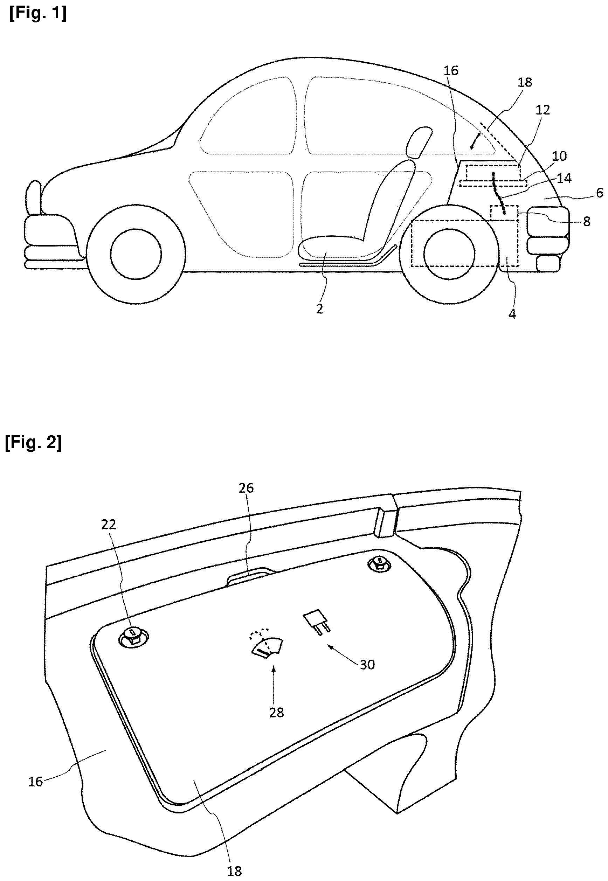

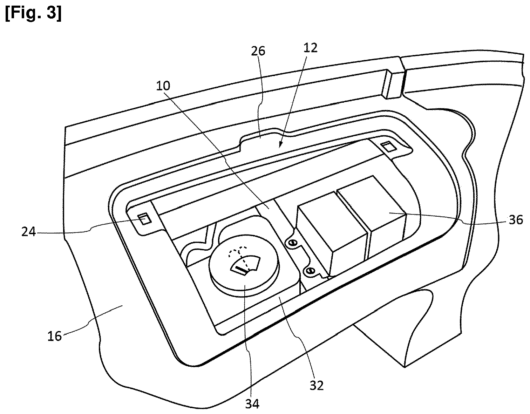

Les figures 1, 2 et 3 présentent un véhicule comportant un compartiment arrière 6 venant derrière une rangée de sièges 2, contenant une batterie 4 d'alimentation d'une machine électrique de traction de ce véhicule.

Pour des raisons de simplification du véhicule et de réduction des coûts, le compartiment arrière 6 ne comporte pas de trappe équipée d'un couvercle à l'arrière du véhicule, les équipements disposés dans ce compartiment étant accessibles par le dessous du véhicule. En particulier le compartiment arrière 6 peut recevoir un câble électrique permettant le branchement d'un chargeur intégré dans le véhicule sur un réseau de distribution d'électricité extérieure, afin de recharger la batterie de traction 4.

Le compartiment arrière 6 comporte un convertisseur de courant continu/continu 8, qui transforme une haute tension de la batterie 4 nécessaire pour alimenter la machine électrique de traction, en une basse tension de 12V qui alimente le réseau de bord du véhicule.

Une traverse 10 fixée en partie supérieure du compartiment arrière, supporte des équipements 12 comprenant un réservoir de lave-glace 32, et des boîtiers de fusibles 36 disposés en entrée du réseau de bord, comportant des fusibles et des relais. Des câbles électriques 14 relient directement le convertisseur de courant 8 aux boîtiers de fusibles 36 disposés au-dessus. Cette disposition comprenant les boîtiers de fusibles 36 installés en partie supérieure du compartiment arrière 6, juste au-dessus de la batterie de traction 4, permet d'obtenir des câbles électriques 14 transmettant une certaine puissance qui sont courts, ce qui réduit les pertes d'énergie et diminue les coûts de ces câbles. De plus on obtient une meilleure protection contre l'humidité des systèmes électriques contenus dans les boîtiers de fusibles 36, grâce à cette position supérieure qui est moins exposée à l'humidité.

La plage arrière 16 formée par le moulage d'une matière plastique, présente une forme bombée dans la direction longitudinale du véhicule, descendant vers l'avant, qui ferme l'espace entre la lunette arrière du véhicule et la rangée de sièges 2.

La plage arrière 16 comporte une trappe fermée par un couvercle 18 formé par le moulage d'une matière plastique, présentant une forme bombée incrustée dans un léger creux de cette plage afin d'obtenir une surface de la plage globalement continue quand ce couvercle est fermé, qui suit le profil général de cette plage.

Le couvercle 18 comporte en partie inférieure des pattes s'engageant sur un bord inférieur de la trappe, et en partie supérieure deux verrous imperdables 22 qui s'engagent dans des perçages 24 de la planche pour se verrouiller ou se déverrouiller avec un mouvement d'un quart de tour facile à exécuter. Un creux supérieur 26 formé sur la plage arrière 16 juste au-dessus du couvercle 18, permet de glisser les doigts sous le bord supérieur de ce couvercle afin de le soulever quand les verrous 22 sont déverrouillés.

La traverse 10 fixée un peu en dessous de la plage arrière 16, reçoit en partie droite deux boîtiers de fusibles similaires 36 fixés à côté l'un de l'autre par des vis sur cette traverse, et en partie gauche le réservoir de liquide de lave-glace 32 alimentant un lave-glace du pare-brise, comportant sur le dessus un bouchon de remplissage 34.

Avantageusement on prévoit des boîtiers de fusibles 36 qui sont modulaires, permettant de réaliser différentes configurations de circuits électriques avec un nombre de fusibles varié, dépendant des équipements et des accessoires installés suivant le type de véhicule.

De cette manière après avoir ouvert le couvercle 18 comportant un marquage gravé formant vers la gauche un symbole du lave-glace 28 et vers la droite un symbole d'un fusible 30, afin de signaler à un opérateur le positionnement de ces équipements, on obtient facilement un accès direct au bouchon de remplissage 34 du réservoir de lave-glace 32 et aux fusibles qui se trouvent juste en dessous du couvercle, pour faire des opérations de maintenance.

En particulier l'opérateur peut ouvrir les boîtiers de fusibles 36 pour contrôler ou changer des fusibles ou des relais.

L'opérateur a aussi accès au bouchon 34 de remplissage du réservoir 32 pour effectuer des remplissages de ce réservoir par l'intermédiaire de la trappe. Un éventuel débordement ou des coulées du produit autour du bouchon 34 s'évacuent dans ce cas directement au travers du compartiment arrière 6 pour s'écouler sous le véhicule, sans risquer de faire couler le liquide dans l'habitacle du véhicule. De cette manière on préserve la propreté de l'habitacle et on évite l'introduction d'odeur dedans.

L'intégration des équipements devant rester accessibles pour des opérations de maintenance, sous la plage arrière 16 comportant un simple couvercle 18 réalisé de manière économique, permet d'éviter l'installation dans l'habitacle de compartiments spécifiques pour ces équipements qui prendrait de la place et ajouterait des coûts supplémentaires. On évite aussi la réalisation d'un compartiment s'ouvrant vers l'extérieur du véhicule, comprenant un couvercle sur l'extérieur de la carrosserie, qui serait moins protégé de l'humidité, moins esthétique et plus cher.

## Revendications

1. Véhicule automobile équipé d'un réservoir de lave-glace (32) installé dans un compartiment arrière du véhicule (6) et comportant dans l'habitacle une plage arrière (16) disposée entre des sièges (2) et une lunette arrière du véhicule, **caractérisé en ce que** la plage (16) comprend une trappe équipée d'un couvercle (18) recouvrant un bouchon de remplissage (34) du réservoir (32), ce couvercle (18) permettant dans une position ouverte un accès au bouchon (34) pour un remplissage du réservoir (32).

2. Véhicule automobile selon la revendication 1, **caractérisé en ce qu'**il comporte une traverse (10) fixée en partie supérieure du compartiment arrière (6), en-dessous de la plage arrière (16), recevant le réservoir (32) qui est posé dessus.

3. Véhicule automobile selon la revendication 1 ou 2, **caractérisé en ce qu'**il comporte des boîtiers de fusibles (36) disposés sous la trappe, et accessibles quand le couvercle (18) est ouvert.

4. Véhicule automobile selon l'une quelconque des revendications précédentes, **caractérisé en ce que** le couvercle (18) présente une forme courbée qui s'inscrit globalement dans la forme de la plage arrière (16) quand il est fermé.

5. Véhicule automobile selon la revendication 4, **caractérisé en ce que** le couvercle (18) comporte des verrous (22) qui sont verrouillables par une rotation suivant une fraction de tour.

6. Véhicule automobile selon l'une quelconque des revendications précédentes, **caractérisé en ce que** le couvercle (18) comporte un marquage formé par un symbole représentant un lave-glace (28).

7. Véhicule automobile selon l'une quelconque des revendications précédentes, **caractérisé en ce que** le compartiment arrière (6) comporte une batterie d'alimentation d'un moteur de traction du véhicule (4), qui est disposée en dessous du réservoir de lave-glace (32).

8. Véhicule automobile selon l'une quelconque des revendications précédentes, **caractérisé en ce que** le compartiment arrière (6) ne comporte aucun ouvrant donnant vers l'extérieur, l'accès à ses équipements intérieurs se faisant par le dessous du véhicule.

9. Procédé de remplissage du réservoir de lave-glace (32) sur un véhicule selon l'une quelconque des revendications précédentes, **caractérisé en ce qu'**un opérateur se rendant dans l'habitacle à l'arrière du véhicule, ouvre le couvercle (18) de la plage arrière (16), puis ouvre le bouchon de remplissage (34) disposé sous le couvercle (18) pour réaliser le remplissage du réservoir (32).

## Patentansprüche

1. Kraftfahrzeug , das mit einem Scheibenwaschbehälter (32) ausgestattet ist, der in einem hinteren Raum des Fahrzeugs (6) installiert ist und im Fahrgastraum eine hintere Hutablage (16) umfasst, die zwischen Sitzen (2) und einer Heckscheibe des Fahrzeugs angeordnet ist, **dadurch gekennzeichnet, dass** der Herd (16) eine Luke umfasst, die mit einer Abdeckung (18) ausgestattet ist, die einen Einfülldeckel (34) des Behälters (32) abdeckt, wobei diese Abdeckung (18) in einer offenen Position Zugang zum Deckel (34) zum Befüllen ermöglicht Tank (32).

2. Kraftfahrzeug nach Anspruch 1, **dadurch gekennzeichnet, dass** es einen Querträger (10) umfasst, der im oberen Teil des hinteren Fachs (6) unterhalb der Hutablage (16) befestigt ist und den darüber platzierten Tank (32) aufnimmt.

3. Kraftfahrzeug nach Anspruch 1 oder 2, **dadurch gekennzeichnet, daß** es Sicherungskästen (36) aufweist, die unter der Klappe angeordnet und bei geöffnetem Deckel (18) zugänglich sind.

4. Kraftfahrzeug nach einem der vorhergehenden Ansprüche, **dadurch gekennzeichnet, daß** die Abdeckung (18) eine gewölbte Form aufweist, die sich im geschlossenen Zustand allgemein der Form der Heckablage (16) anpaßt.

5. Kraftfahrzeug nach Anspruch 4, **dadurch gekennzeichnet, daß** der Deckel (18) durch Drehung um einen Bruchteil einer Umdrehung arretierbare Riegel (22) aufweist.

6. Kraftfahrzeug nach einem der vorhergehenden Ansprüche, **dadurch gekennzeichnet, dass** die Abdeckung (18) eine Markierung aufweist, die durch ein Symbol gebildet ist, das eine Scheibenwaschanlage (28) darstellt.

7. Kraftfahrzeug nach einem der vorhergehenden Ansprüche, **dadurch gekennzeichnet, daß** das Heckabteil (6) eine Batterie zur Versorgung eines Fahrmotors des Fahrzeugs (4) aufweist, der unterhalb des Scheibenwaschbehälters (32) angeordnet ist.

8. Kraftfahrzeug nach einem der vorangehenden Ansprüche, **dadurch gekennzeichnet, dass** der Heckraum (6) keine nach außen öffnende Öffnung aufweist, wobei der Zugang zu seiner Innenausstattung von der Unterseite des Fahrzeugs erfolgt.

9. Verfahren zum Füllen des Scheibenwaschbehälters (32) an einem Fahrzeug nach einem der vorhergehenden Ansprüche, **dadurch gekennzeichnet, dass** eine Bedienungsperson, die in den Fahrgastraum am Heck des Fahrzeugs einsteigt, die Abdeckung (18) des Fahrzeugs öffnet Hutablage (16) und öffnet dann den unter der Abdeckung (18) platzierten Tankdeckel (34), um den Tank (32) zu füllen.

## Claims

1. Motor vehicle equipped with a windscreen washer reservoir (32) installed in a rear compartment of the vehicle (6) and comprising in the passenger compartment a rear parcel shelf (16) arranged between seats (2) and a rear window of the vehicle, **characterized in that** the range (16) comprises a hatch equipped with a cover (18) covering a filler cap (34) of the reservoir (32), this cover (18) allowing in an open position access to the cap (34 ) for filling the tank (32).

2. Motor vehicle according to Claim 1, **characterized in that** it comprises a crosspiece (10) fixed in the upper part of the rear compartment (6), below the rear shelf (16), receiving the tank (32) which is placed above.

3. Motor vehicle according to Claim 1 or 2, **characterized in that** it comprises fuse boxes (36) arranged under the hatch, and accessible when the cover (18) is open.

4. Motor vehicle according to any one of the preceding claims, **characterized in that** the cover (18) has a curved shape which generally fits into the shape of the rear parcel shelf (16) when it is closed.

5. Motor vehicle according to Claim 4, **characterized in that** the cover (18) comprises bolts (22) which can be locked by rotation through a fraction of a turn.

6. Motor vehicle according to any one of the preceding claims, **characterized in that** the cover (18) includes a marking formed by a symbol representing a windscreen washer (28).

7. Motor vehicle according to any one of the preceding claims, **characterized in that** the rear compartment (6) comprises a battery for supplying a traction motor of the vehicle (4), which is arranged below the windscreen washer reservoir (32).

8. Motor vehicle according to any one of the preceding claims, **characterized in that** the rear compartment (6) does not include any opening opening outwards, access to its interior fittings taking place from underneath the vehicle.

9. Method of filling the window washer reservoir (32) on a vehicle according to any one of the preceding claims, **characterized in that** an operator going into the passenger compartment at the rear of the vehicle, opens the cover (18) of the parcel shelf (16), then opens the filler plug (34) arranged under the cover (18) to fill the tank (32).
